# DEMANDE DE BREVET EUROPEEN

(11) **EP 1 253 060 A1**
(43) Date de publication de la demande: **30.10.2002**
(21) Numéro de dépôt: 02290974.1
(22) Date de dépôt: 17.04.2002
(51) Int. Cl.: B62D 1/18

(54) **Colonne de direction réglable**

(30) Priorité: 27.04.2001 FR 0105753
(71) Demandeur: Faurecia Industries, 92000 Nanterre (FR)
(72) Inventeur: Hoblingre, André, 90380 Roppe (FR)
(74) Mandataire: Jacobson, Claude

(57) **Abrégé**

Cet ensemble comprend un arbre de direction (4) dont une extrémité arrière (8) est mobile le long d'au moins une direction de réglage (D), un dispositif (9) de blocage en position dont un organe d'actionnement (10) est mobile en rotation autour d'un premier axe de rotation (A1), un organe (15) de commande de l'organe d'actionnement mobile en rotation autour d'un deuxième axe de rotation (A2), et un mécanisme (16) de transmission d'un mouvement de rotation de l'organe de commande vers l'organe d'actionnement.

Ce mécanisme comprend une structure mécanique articulée et déformable le long de la direction de réglage (D). Cette structure comprend un premier organe intermédiaire de transmission (30) rotatif autour d'un troisième axe de rotation (A3) et au moins deux biellettes (26, 31). Le mécanisme comprend des moyens (34, 35, 37, 40) de couplage en rotation de l'organe de commande et de l'organe d'actionnement via l'organe intermédiaire.

## Description

La présente invention concerne un ensemble de direction pour véhicule automobile, du type comprenant :
- une structure de support,
- une colonne de direction portée par la structure de support, la colonne de direction comprenant un arbre de direction s'étendant le long d'un axe longitudinal, une extrémité arrière de l'arbre de direction étant destinée à être reliée à un volant de direction et étant mobile par rapport à la structure de support le long d'au moins une direction de réglage,
- un dispositif de blocage en position de la colonne de direction, ce dispositif comprenant un organe d'actionnement mobile en rotation autour d'un premier axe de rotation entre une position de blocage et une position de libération de la colonne de direction, le premier axe de rotation étant mobile par rapport à l'extrémité arrière de l'arbre de direction lorsqu'elle se déplace le long de la direction de réglage,
- un organe de commande de l'organe d'actionnement, cet organe de commande étant mobile en rotation autour d'un deuxième axe de rotation, le deuxième axe de rotation étant lié à l'extrémité arrière de l'arbre de direction lorsqu'elle se déplace le long de la direction de réglage, et
- un mécanisme de transmission d'un mouvement de rotation de l'organe de commande vers l'organe d'actionnement.

Dans un tel ensemble de direction, la position de la colonne de direction est réglable par déplacement de l'extrémité arrière de l'arbre de direction suivant deux directions sensiblement orthogonales. Une première direction est sensiblement orthogonale à l'axe longitudinal de l'arbre de direction et correspondant à un réglage dit en hauteur. La deuxième direction est sensiblement parallèle à l'axe longitudinal de l'arbre de direction et correspondant à un réglage dit en profondeur. Bien que l'axe longitudinal de l'arbre de direction ne soit pas disposé strictement horizontalement, on qualifie généralement la première direction de verticale et la deuxième d'horizontale.

L'organe d'actionnement du dispositif de blocage est généralement un tirant qui s'étend entre deux flasques de la structure de support entre lesquels la colonne de direction est disposée. Ce tirant est par exemple associé à une came et à un suiveur de came pour que sa rotation provoque le rapprochement des deux flasques, et ainsi le blocage en position de la colonne de direction, ou permette l'écartement des deux flasques et ainsi la modification de la position de la colonne de direction.

Habituellement, la rotation du tirant est provoquée par un levier de manoeuvre solidaire d'une extrémité du tirant. Toutefois, dans un tel agencement, le tirant qui traverse des ouvertures oblongues verticales des flasques ne peut se déplacer horizontalement. Le levier de manoeuvre reste donc fixe horizontalement et ne suit pas l'extrémité arrière de l'arbre de direction lorsque sa position est modifiée en profondeur.

Généralement, l'extrémité arrière de l'arbre de direction est entourée d'une gaine d'habillage qui est solidaire longitudinalement de cette extrémité arrière. Une ouverture de passage du levier de manoeuvre y est ménagée pour qu'un conducteur puisse la saisir.

Il est nécessaire que l'ouverture de passage du levier de manoeuvre soit d'une longueur relativement importante pour permettre les déplacements longitudinaux relatifs entre le levier de manoeuvre et l'extrémité arrière de l'arbre de direction lors du réglage en profondeur de la colonne de direction.

Or, cela complique la structure et dégrade l'aspect esthétique de la gaine d'habillage.

Pour résoudre ce problème, FR-2 690 403 a proposé un ensemble du type précité. Dans cet ensemble, le levier de manoeuvre, ou organe de commande est relié au tirant, ou organe d'actionnement, par l'intermédiaire d'un mécanisme de transmission à câbles. Ce mécanisme de transmission permet au levier de manoeuvre de suivre l'extrémité arrière de l'arbre de direction lors des réglages en profondeur et donc de limiter la longueur de l'ouverture de passage du levier de manoeuvre.

Toutefois, on rencontre de nombreux problèmes lors de l'utilisation d'un tel mécanisme de transmission. En effet, en raison de la faible place disponible, les courbures imposées aux câbles sont importantes. Ces courbures importantes entraînent des frottements élevés nuisant à l'efficacité du mécanisme de transmission. De plus, un tel mécanisme de transmission nécessite une tension adéquate des câbles qu'il convient de vérifier régulièrement pour que son fonctionnement soit satisfaisant.

FR-2 761 036 a proposé une autre solution permettant au levier de manoeuvre de suivre l'extrémité arrière de l'arbre de direction lors des différents réglages en position. Toutefois, cette solution impose de modifier fortement l'agencement de l'ensemble de direction et notamment de sa structure de support.

Un but de l'invention est de résoudre ces problèmes en fournissant un ensemble du type précité dont le mécanisme de transmission soit plus fiable et plus efficace, sans imposer de modifications importantes de la structure de support.

A cet effet, l'invention a pour objet un ensemble du type précité, caractérisé en ce que le mécanisme de transmission comprend une structure mécanique articulée et déformable le long de la direction de réglage, cette structure comprenant au moins un premier organe intermédiaire de transmission et au moins deux biellettes articulées à l'organe intermédiaire de transmission, l'organe intermédiaire de transmission étant mobile en rotation autour d'un troisième axe de rotation, et en ce que le mécanisme de transmission comprend des moyens de couplage en rotation de l'organe de commande et de l'organe d'actionnement via l'organe intermédiaire de transmission.

Selon des modes particuliers de réalisation de l'invention, l'ensemble peut comprendre l'une ou plusieurs des caractéristiques suivantes, prise(s) isolément ou selon toutes les combinaisons techniquement possibles :
- la structure articulée et les moyens de couplage en rotation sont adaptés pour maintenir sensiblement, au cours de la déformation de la structure articulée, les orientations angulaires respectives de l'organe d'actionnement par rapport au premier axe de rotation et de l'organe de commande par rapport au deuxième axe de rotation ;
- la structure articulée et les moyens de couplage en rotation sont adaptés pour que, en l'absence d'un mouvement de rotation de l'organe de commande, l'organe intermédiaire de transmission se déplace par translation rotative par rapport à l'organe d'actionnement et à l'organe de commande lorsque la structure articulée se déforme le long de la direction de réglage ;
- les moyens de couplage en rotation comprennent au moins une biellette supplémentaire articulée à l'organe intermédiaire de transmission pour former avec la première biellette ou respectivement avec la deuxième biellette un parallélogramme déformable ;
- les moyens de couplage en rotation comprennent deux biellettes supplémentaires, articulées à l'organe intermédiaire de transmission pour former respectivement avec la première biellette un premier parallélogramme déformable et avec la deuxième biellette un deuxième parallélogramme déformable ;
- les angles du ou d'au moins un des parallélogramme(s) déformable(s) sont excentrés par rapport aux premier, deuxième et troisième axes de rotation ;
- les moyens de couplage en rotation comprennent au moins une première poulie ou roue dentée d'extrémité solidaire en rotation de l'organe d'actionnement ou respectivement de l'organe de commande, et une première courroie ou chaîne tendue entre la première poulie ou roue dentée d'extrémité et une première poulie ou roue dentée intermédiaire formée par l'organe intermédiaire de transmission ;
- la première poulie ou roue dentée d'extrémité est solidaire en rotation de l'organe d'actionnement, les moyens de couplage en rotation comprennent en outre une deuxième poulie ou roue dentée d'extrémité solidaire en rotation de l'organe de commande, et les moyens de couplage comprennent au moins une courroie ou chaîne tendue entre la deuxième poulie ou roue dentée d'extrémité et une poulie ou roue dentée intermédiaire formée par l'organe intermédiaire de transmission ;
- l'organe intermédiaire de transmission forme une deuxième poulie ou roue dentée intermédiaire, et les moyens de couplage comprennent une deuxième courroie ou chaîne tendue entre la deuxième poulie ou roue dentée d'extrémité et la deuxième poulie ou roue dentée intermédiaire ;
- la structure articulée comprend un deuxième organe intermédiaire de transmission formant une deuxième poulie ou roue dentée intermédiaire, une troisième biellette et une quatrième biellette articulées au deuxième organe intermédiaire de transmission, le deuxième organe intermédiaire de transmission est mobile en rotation autour d'un quatrième axe de rotation, et la première courroie ou chaîne passe sur la première poulie ou roue dentée d'extrémité, la première poulie ou une roue dentée intermédiaire, la deuxième poulie ou roue dentée d'extrémité et la deuxième poulie ou roue dentée intermédiaire ; et
- la direction de réglage est parallèle à l'axe longitudinal de l'arbre de direction.

L'invention a en outre pour objet un véhicule automobile comprenant un ensemble tel que défini ci-dessus.

L'invention sera mieux comprise à la lecture de la description qui va suivre, donnée uniquement à titre d'exemple, et faite en se référant aux dessins annexés, sur lesquels:
- la figure 1 est une vue schématique et latérale d'un ensemble de direction muni d'un mécanisme de transmission selon un premier mode de réalisation de l'invention,
- la figure 2 est une vue schématique, partielle, agrandie et latérale illustrant le mécanisme de transmission de l'ensemble de la figure 1,
- la figure 3 est une vue schématique, partielle et de dessous du mécanisme de transmission de la figure 2,
- la figure 4 est une vue analogue à la figure 2, illustrant le mécanisme de transmission après modification du réglage en profondeur de la colonne de direction,
- la figure 5 est une vue schématique, partielle et latérale illustrant un mécanisme de transmission suivant un deuxième mode de réalisation,
- la figure 6 est une vue analogue à la figure 5 après modification du réglage en profondeur de la colonne de direction,
- la figure 7 est une vue schématique, partielle et latérale illustrant un troisième mode de réalisation d'un mécanisme de transmission selon l'invention,
- la figure 8 est une vue analogue à la figure 7 illustrant le mécanisme de transmission après rotation du levier de manoeuvre, et
- la figure 9 est une vue analogue à la figure 7 illustrant le mécanisme de transmission après modification du réglage en profondeur de la colonne de direction.

Dans tout ce qui suit, les orientations utilisées sont les orientations habituelles d'un véhicule automobile. En particulier, les termes « avant », « arrière », « longitudinal », « droit » et « gauche » s'entendent par rapport au sens de marche du véhicule et à la position d'un conducteur.

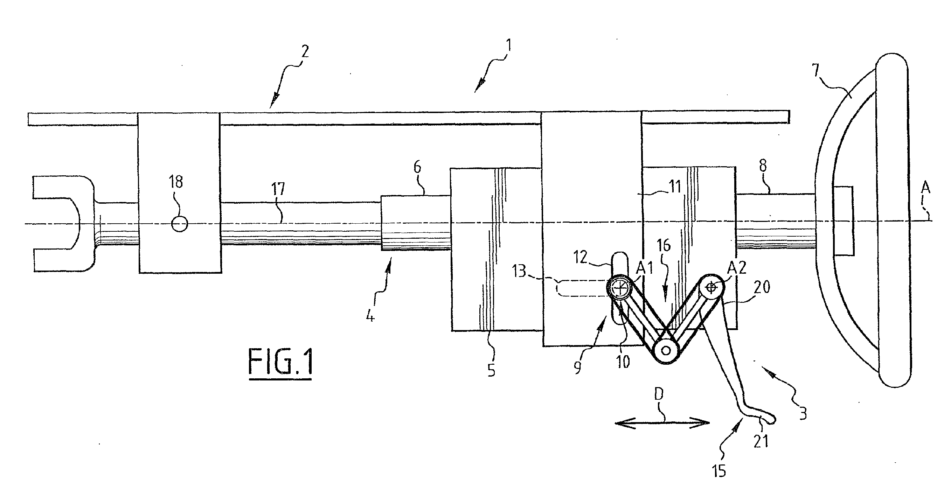

La figure 1 illustre schématiquement un ensemble de direction 1 comprenant:
- une structure de support 2,
- une colonne de direction 3 comprenant un arbre de direction télescopique 4 d'axe longitudinal A horizontal et un corps de colonne 5, dans lequel le tronçon arrière 6 de l'arbre de direction 4 est monté rotatif,
- un volant de direction 7 fixé à l'extrémité arrière 8 du tronçon arrière 6 de l'arbre de direction 4,
- un dispositif 9 de blocage en position de la colonne de direction 3, ce dispositif comprenant classiquement un tirant d'actionnement 10, lequel tirant 10 s'étend entre deux flasques latéraux arrière 11 de la structure de support 2, en passant dans des lumières oblongues verticales 12 ménagées dans les flasques 11 et dans des lumières oblongues horizontales 13 ménagées dans le corps 5,
- un levier 15 de manoeuvre du tirant 10, lequel levier 15 est monté sur le côté gauche du corps 5, à l'arrière du tirant 10, et
- un mécanisme 16 de transmission du mouvement de rotation du levier 15 au tirant 10, ce mécanisme étant disposé latéralement du côté gauche de l'ensemble 1.

Le tronçon avant 17 de l'arbre de direction 4 est terminé par une fourche de cardan destinée à être reliée au reste du mécanisme de direction qui n'a pas été représenté. Ce tronçon avant 17 est articulé de manière classique à l'avant de la structure de support 2 par un pivot 18 horizontal et sensiblement orthogonal à l'axe A.

Le dispositif de blocage 9 est un dispositif classique comprenant par exemple un système à came et à suiveur de came permettant, sous l'effet d'une rotation du tirant 10 autour d'un premier axe de rotation A1 sensiblement horizontal et orthogonal à l'axe A, de provoquer le rapprochement des flasques 11 ou leur écartement. Ainsi le tirant 10 est mobile en rotation entre une position de blocage et une position de libération de la colonne de direction 3.

Lorsque le tirant 10 est dans sa position de blocage, les flasques 11 sont rapprochés et enserrent entre eux le corps de colonne 5 pour bloquer la colonne de direction 3 dans une position souhaitée.

Lorsque le tirant 10 est dans sa position de libération, le corps de colonne 5, et donc l'extrémité arrière 8 de l'arbre 4, peuvent se déplacer entre les flasques 11, ce qui permet de régler la position de la colonne de direction 3.

Plus particulièrement, le réglage peut s'effectuer en hauteur, par déplacement du tirant 10 dans les lumières verticales 12, le corps 5 et le tronçon arrière 6 de l'arbre 4 suivant le tirant 10 dans ses déplacements verticaux.

Le réglage peut également s'effectuer en profondeur par déplacement longitudinal du corps 5 par rapport au tirant 10 qui reste fixe par rapport aux flasques 11. Ce déplacement relatif est permis par les lumières horizontales 13. Dans ce cas, grâce à la structure télescopique de l'arbre de direction 4, le volant de direction 7 peut être déplacé en avant et en arrière suivant la direction longitudinale D illustrée par la double flèche sur la figure 1. Cette direction est parallèle à l'axe A de l'arbre de direction 4.

L'extrémité supérieure 20 du levier 15 est montée à rotation à l'arrière et à gauche du corps de colonne 5 autour d'un deuxième axe de rotation A2. Cet axe A2 est sensiblement parallèle à l'axe A1 et contenu sensiblement dans un même plan horizontal que ce dernier.

Cet axe A2 est lié au corps 5. Ainsi, lorsque la position longitudinale du volant 7 est modifiée, le deuxième axe de rotation A2 suit le corps de colonne 5, le tronçon arrière 6 de l'arbre 4 et donc le volant 7, tandis que le premier axe de rotation A1 reste fixe par rapport à la structure de support 2.

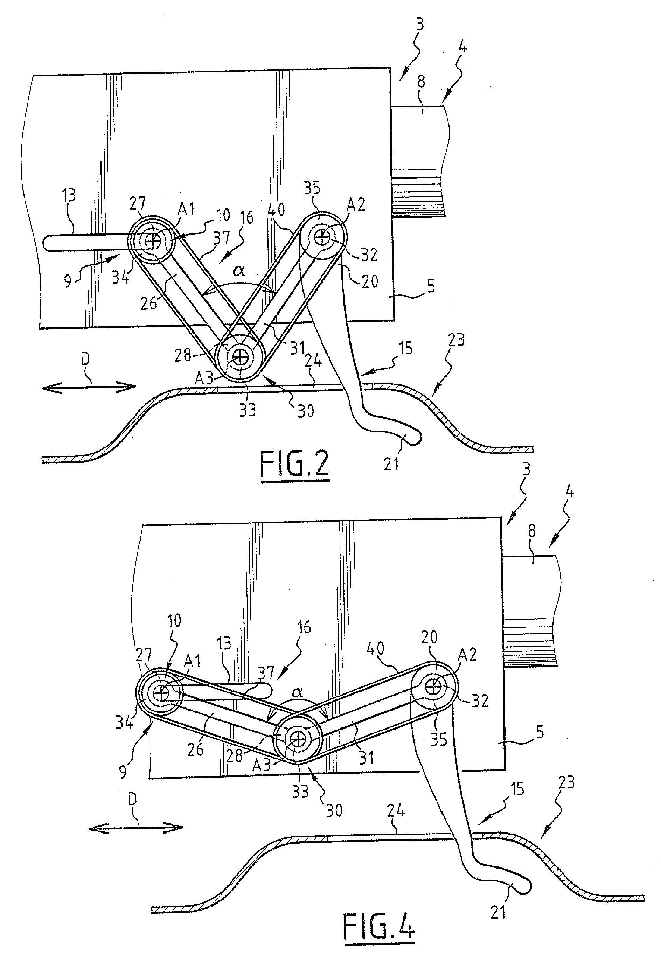

Comme on le voit sur la figure 2 où la structure 2 et ses flasques 11 n'ont pas été représentés, l'extrémité inférieure 21 du levier 15 forme une poignée de saisie pour un conducteur du véhicule automobile.

Cette extrémité 21 fait saillie vers le bas hors d'une gaine d'habillage 23, qui entoure l'extrémité arrière 8 de l'arbre de direction 4 et qui est solidaire longitudinalement de cette extrémité 8. Cette gaine 23 a été représentée en coupe sur la figure 2. L'extrémité 21 du levier 15 traverse la gaine 23 par l'intermédiaire d'une ouverture inférieure 24 ménagée dans la gaine 23 et s'étendant longitudinalement.

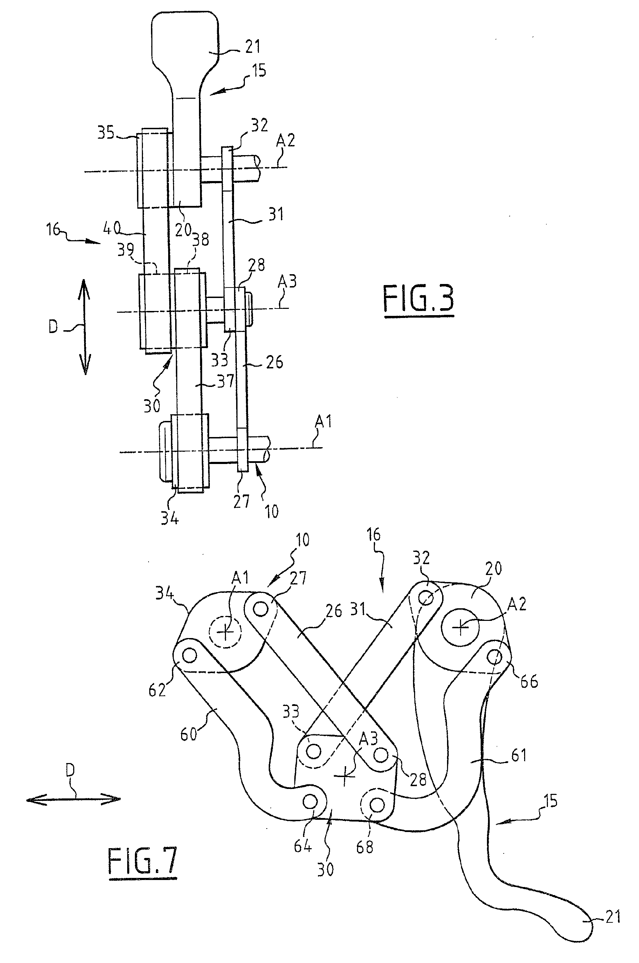

Comme illustré plus particulièrement par les figures 2 et 3, le mécanisme de transmission 16 comprend une première biellette 26 articulée par son extrémité avant 27 au tirant 10 autour du premier axe de rotation A1, et par son extrémité arrière 28 à un organe de transmission intermédiaire 30 autour d'un troisième axe de rotation A3. Ce troisième axe de rotation A3 est sensiblement parallèle au premier et au deuxième axes de rotation A1 et A2. Le troisième axe de rotation A3 est disposé sous le plan horizontal contenant les axes A1 et A2. L'organe 30 est un manchon cylindrique circulaire d'axe horizontal.

Le mécanisme de transmission 16 comprend en outre une deuxième biellette 31 dont l'extrémité arrière 32 est articulée à l'extrémité supérieure 20 du levier de manoeuvre 15 autour du deuxième axe de rotation A2. L'extrémité avant 33 de la deuxième biellette 31 est articulée à l'organe de transmission intermédiaire 30 autour du troisième axe de rotation A3.

Ainsi, les deux biellettes 26 et 31 forment un coude disposé sous le tirant 10 et l'extrémité supérieure 20 du levier 15.

L'extrémité gauche 34 du tirant 10 forme une première poulie d'extrémité solidaire en rotation du tirant 10. Cette poulie 34 est située à gauche du flasque 11 gauche. L'extrémité supérieure 20 du levier 15 est prolongée latéralement vers la gauche par une saillie 35 formant une deuxième poulie d'extrémité solidaire en rotation du levier 15.

Le mécanisme de transmission 16 comprend en outre une première courroie sans fin 37 qui est tendue entre la première poulie d'extrémité 34 et un premier tronçon latéral droit 38 de l'organe intermédiaire de transmission 30. Ce tronçon latéral droit 38 forme une première poulie intermédiaire. Le mécanisme de transmission 16 comprend une deuxième courroie sans fin 40 qui est tendue entre la deuxième poulie d'extrémité 35 et un tronçon latéral gauche 39 de l'organe intermédiaire de transmission 30. Ce tronçon 39 forme une deuxième poulie intermédiaire.

Lorsque le conducteur souhaite bloquer en position ou libérer la colonne de direction 3, il entraîne le levier 15 en rotation autour du deuxième axe de rotation A2 par l'intermédiaire de son extrémité de saisie 21. Ce mouvement de rotation est transmis par la deuxième courroie 40 à l'organe intermédiaire de transmission 30. Le mouvement de rotation de l'organe intermédiaire de transmission 30 est transmis au tirant 10 via la première courroie 37 et la première poulie d'extrémité 34. Ainsi, le conducteur peut commander, via le levier 15, le déplacement du tirant 10 entre ses positions de blocage et de libération, et donc le fonctionnement du dispositif de blocage 9.

Lorsque le tirant 10 est en position de libération de la colonne de direction, le corps de colonne 5 et le tronçon arrière 6 de l'arbre de direction 4 ne sont plus bloqués par les flasques 11. Les deux biellettes 26 et 31 forment alors une structure articulée déformable par extension et rétraction le long de la direction D de réglage en profondeur.

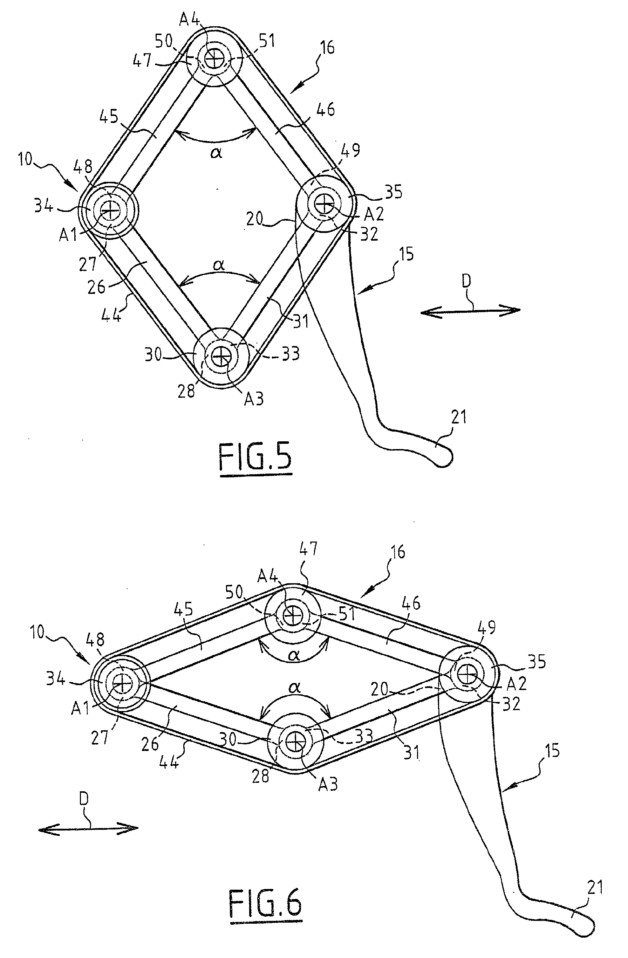

Comme illustré par les figures 2 et 4, cette structure articulée déformable permet au corps 5, et donc à l'extrémité supérieure 20 du levier 15, de se déplacer longitudinalement par rapport au tirant 10 fixe longitudinalement.

Sur la figure 2, le corps 5, et par conséquent le volant 7, sont dans la position longitudinale la plus avancée. Le tirant 10 prend alors appui sur les fonds arrière des lumières horizontales 13 du corps 5. Sur la figure 4, le corps 5, et par conséquent le volant 7, sont dans la position la plus reculée. Le tirant 10 prend alors appui sur les fonds avant des lumières horizontales 13.

Au cours du passage de la position avancée de la figure 2 à la position reculée de la figure 4, le coude formé par les deux biellettes 26 et 31 se déplie de sorte que l'angle α formé entre ces deux biellettes 26 et 31 augmente. Simultanément l'axe A2 recule par rapport à l'axe A1.

Plus spécifiquement, la première biellette 26 pivote, dans le sens anti-horaire sur la figure 2, autour du premier axe de rotation A1 pour se rapprocher d'une position horizontale. La première poulie d'extrémité 34 restant angulairement fixe par rapport au corps 5, c'est également le cas de la première poulie intermédiaire 38 qui est de sensiblement même diamètre. L'organe 30 reste donc angulairement fixe par rapport au corps 5.

Simultanément, l'extrémité arrière 28 de la première biellette 26 se déplace vers le haut et vers l'arrière tout comme l'extrémité avant 33 de la deuxième biellette 31. La deuxième biellette 31 pivote autour du deuxième axe A2 dans les sens horaire sur la figure 2 en tendant à se rapprocher d'une position horizontale. La deuxième poulie d'extrémité 35, dont le diamètre est sensiblement le même que celui de la deuxième poulie intermédiaire 39, reste sensiblement angulairement fixe par rapport au corps 5.

Ainsi, au cours du déplacement axial relatif du tirant 10 et du tronçon arrière 6 de l'arbre de direction 4, la position angulaire du levier 15 est maintenue sensiblement constante. Cela est obtenu grâce au fait que, lors de la déformation de la structure articulée, les mouvements relatifs de l'organe intermédiaire 30 par rapport au tirant 10 et au levier 15 sont des translations rotatives n'impliquant aucune rotation.

Lorsqu'on modifie en hauteur la position du volant 7 par rapport à la structure 2, le tirant 10 et le levier 15 suivent le corps de colonne 5 et donc le volant de direction 7.

Ainsi, le mécanisme de transmission 16 permet de commander à partir du levier 15 le fonctionnement du dispositif 9 de blocage tout en maintenant le levier 15 fixe en position par rapport au volant 7 dans les deux directions de réglage ainsi qu'angulairement par rapport à son axe de rotation A2. Ainsi, l'ouverture 24 prévue dans la gaine 23 peut être de dimensions réduites et la structure de la gaine 23 particulièrement simple.

En outre, le fonctionnement du mécanisme 16 est simple et fiable. Ce mécanisme 16 ne nécessite pas de modifier la structure de support 2 et l'ensemble de direction 1 existant. Il peut donc s'adapter avec des surcoûts réduits à de tels ensembles 1 existants.

Les courroies 37 et 40 et les poulies 34, 35, 38 et 39 peuvent être munies de reliefs, par exemple de crans, permettant d'assurer un couplage en rotation satisfaisant entre l'extrémité gauche 34 du tirant 10, l'organe intermédiaire de transmission 30 et l'extrémité supérieure 20 du levier 15.

Dans une variante, une ou chaque courroie 37, 40 peut être remplacée par une chaîne et les poulies qui lui sont associées par des roues dentées.

Dans une autre variante, la longueur des bielles 26 et 31 peut être différente.

Dans une autre variante, les poulies d'extrémité 34 et 35 peuvent avoir un diamètre différent du diamètre des poulies intermédiaires 38 et 39. Lors de la déformation de la structure articulée formée par les bielles 26 et 31 et l'organe intermédiaire 30, l'organe intermédiaire 30 et le levier 15 sont entraînés en rotation par rapport au corps 5. Malgré cela, la longueur de l'ouverture 24 reste réduite.

Dans encore une autre variante, la structure articulée déformable peut comprendre plus de deux biellettes articulées les unes à la suite des autres en accordéon et associées chacune à deux poulies et à une courroie.

Les figures 5 et 6 illustrent un deuxième mode de réalisation du mécanisme de transmission 16. Sur ces figures, seul le mécanisme de transmission 16, le levier 15 et le tirant 10 ont été représentés.

Le mécanisme de transmission 16 se distingue de celui des figures 1 à 4 par le fait qu'il comprend une courroie sans fin unique 44, une troisième biellette 45 et une quatrième biellette 46.

L'organe intermédiaire de transmission 30 forme une seule poulie intermédiaire. Le mécanisme 16 comprend en outre un deuxième organe intermédiaire de transmission 47 formant une deuxième poulie intermédiaire.

Les poulies 30, 34, 35 et 47 ont par exemple le même diamètre.

Les deux biellettes 45 et 46 sont articulées entre elles ainsi qu'au tirant 10 et au levier 15 pour former, avec les biellettes 26 et 31 et les organes intermédiaires de transmission 30 et 47, un losange articulé, déformable et symétrique par rapport au plan horizontal contenant les axes de rotation A1 et A2.

Ainsi, l'extrémité avant 48 de la troisième biellette 45 est articulée au tirant 10 autour du premier axe de rotation A1 et l'extrémité arrière 49 de la quatrième biellette 46 est articulée au levier 15 autour de l'axe de rotation A2. L'extrémité arrière 50 de la biellette 45 et l'extrémité avant 51 de la biellette 46 sont articulées à la quatrième poulie 47 autour d'un axe de rotation A4 sensiblement parallèle aux axes de rotation A1 à A3 et disposé verticalement au dessus du plan horizontal contenant les axes de rotation A1 et A2.

La courroie unique 44 s'étend le long du contour extérieur du losange formé par les biellettes 26, 31, 45 et 46 en passant successivement sur la première poulie d'extrémité 34, la première poulie intermédiaire 30, la deuxième poulie d'extrémité 35 et la deuxième poulie intermédiaire 47.

Lorsque le levier 15 est entraîné en rotation, son mouvement de rotation est transmis au tirant 10 par l'intermédiaire de la courroie 44 et des poulies 30, 34, 35 et 47. La courroie 44 et les poulies d'extrémité 34 et 35 assurent donc le couplage en rotation du levier 15 et du tirant 10 via les organes intermédiaires 30 et 47.

Par ailleurs, lorsque le volant 7 passe de sa position longitudinalement avancée (figure 5) à sa position longitudinalement reculée (figure 6), le losange formé par les biellettes 26, 31, 45 et 46 se rétracte longitudinalement. L'angle α formé entre les biellettes 26 et 31 et entre les biellettes 45 et 46 diminue alors. Au cours d'une telle déformation, la position angulaire de la première poulie d'extrémité 34 est fixe par rapport au corps 5, tout comme celles des poulies intermédiaires 30 et 47 qui sont animées de mouvements de translation rotative par rapport au corps 5. La position angulaire de la deuxième poulie d'extrémité 35 et l'inclinaison du levier 15 restent donc sensiblement inchangées.

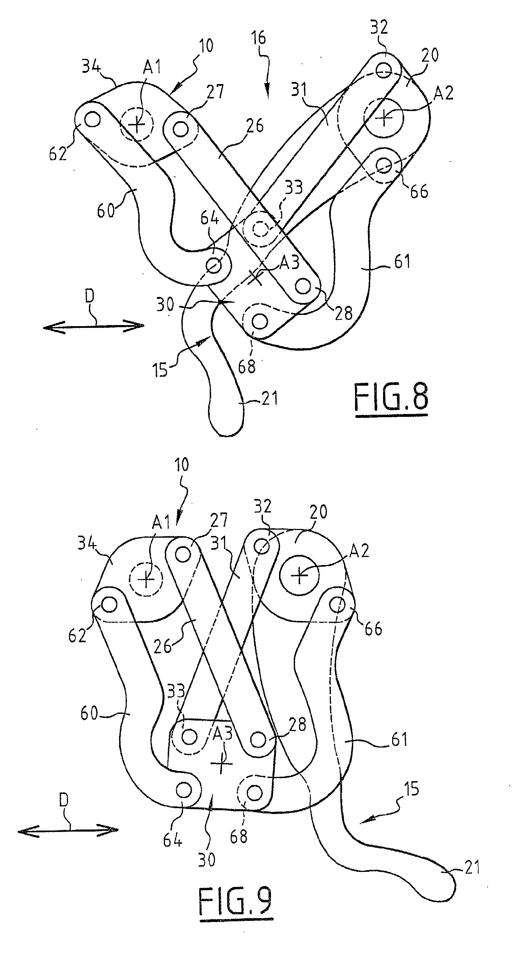

Les figures 7 à 9 illustrent un troisième mode de réalisation dans lequel l'extrémité avant 27 de la première biellette 26 est articulée à l'extrémité gauche 34 du tirant 10 en un point excentré par rapport à l'axe A1.

L'organe intermédiaire de transmission 30 est une plaque sensiblement carrée à coins arrondis à laquelle l'extrémité arrière 28 de la première biellette 26 est articulée en un point excentré du troisième axe de rotation A3.

L'extrémité arrière 32 de la deuxième biellette 31 est articulée à l'extrémité supérieure 20 du levier 15 en un point excentré par rapport au deuxième axe de rotation A2. L'extrémité avant 33 de la deuxième biellette 31 est articulée à l'organe intermédiaire 30 en un point excentré par rapport au troisième axe de rotation A3.

Dans ce mode de réalisation, les moyens de couplage en rotation du tirant 10, de l'organe intermédiaire de transmission 30 et du levier 15 comprennent une troisième biellette 60 et une quatrième biellette 61.

La troisième biellette 60 est articulée par son extrémité avant 62 à l'extrémité gauche 34 du tirant 10 en un point symétrique, par rapport à l'axe de rotation A1, du point d'articulation de l'extrémité avant 27 de la première biellette 26.

L'extrémité arrière 64 coudée de la troisième biellette 60 est articulée à l'organe intermédiaire de montage 30 en un point symétrique, par rapport au troisième axe de rotation A3, du point d'articulation de l'extrémité arrière 28 de la première biellette 26.

Ainsi, la première biellette 26 et la troisième biellette 60 forment un premier parallélogramme déformable dont les angles, correspondant au point d'articulation de ces biellettes, sont excentrés par rapport aux axes de rotation A1 et A3.

L'extrémité arrière 66 de la quatrième biellette 61 est articulée à l'extrémité supérieure 20 du levier 15 en un point symétrique, par rapport au deuxième axe de rotation A2, du point d'articulation de l'extrémité arrière 32 de la deuxième biellette 31.

L'extrémité avant 68 coudée de la quatrième biellette 61 est articulée à l'organe intermédiaire de transmission 30 en un point symétrique, par rapport à l'axe de rotation A3 du point d'articulation de l'extrémité avant 33 de la deuxième biellette 31.

Ainsi la deuxième biellette 31 et la quatrième biellette 61 forment un deuxième parallélogramme déformable dont les angles, formés par les points d'articulation des biellettes 31 et 61, sont excentrés par rapport au deuxième axe de rotation A2 et au troisième axe de rotation A3.

Comme illustré par la figure 8, lorsque le conducteur imprime une rotation au levier 15 autour de l'axe de rotation A2, le deuxième parallélogramme formé par les biellettes 31 et 61 se déforme et provoque la rotation de l'organe intermédiaire de transmission 30 d'un même angle par rapport à l'axe de rotation A3.

La rotation de l'organe de transmission 30 provoque la déformation du premier parallélogramme formé par les biellettes 26 et 60 et l'entraînement en rotation du tirant 10 autour de l'axe A1 du même angle que l'angle de rotation du levier 15.

Ainsi, la troisième biellette 60 et la quatrième biellette 61 couplent en rotation le levier 15, l'organe intermédiaire de transmission 30 et le tirant 10.

Sur les figures 7 et 8, l'écartement longitudinal des deux axes de rotation A1 et A2 correspond à une position longitudinale intermédiaire du volant de direction 7.

La figure 9 illustre le mécanisme de transmission 16 lorsque le volant est dans sa position la plus avancée.

Pour passer de la position intermédiaire des figures 7 et 8 à cette position, le tirant 10 reste fixe et le bloc 5 avance longitudinalement jusqu'à ce que les fonds arrière des lumières horizontales 13 du corps 5 prennent appui sur le tirant 10. Le rapprochement longitudinal des axes A1 et A2 qui en résulte provoque des rotations des biellettes 26 et 60 dans le sens horaire sur la figure 7, la position angulaire du tirant 10 par rapport au premier axe de rotation A1 restant fixe.

Le premier parallélogramme est alors déformé et l'organe intermédiaire de transmission 30 est déplacé vers le bas et vers l'avant. Son déplacement est une translation rotative par rapport au corps 5 de sorte que la position angulaire de l'organe 30 par rapport au corps 5 n'est pas modifiée.

Ce déplacement de l'organe intermédiaire 30 et l'avancement de l'axe A2 induisent une rotation des biellettes 31 et 61 dans le sens anti-horaire sur les figures 7 et 9. Le mouvement relatif entre l'organe 30 et l'extrémité supérieure 20 du levier 15 est également une translation rotative de sorte que la position angulaire du levier 15 n'est pas modifiée par rapport au corps 5 au cours de ce déplacement.

Il en est de même lorsqu'on déplace le volant 7 de sorte que le mécanisme 16 passe de la position de la figure 9 à la position de la figure 7 mais également à sa position correspondant à la position la plus reculée du volant de direction 7.

Dans des variantes de ce mode de réalisation, la première biellette 26 peut être articulée au tirant 10 autour de l'axe A1 et à l'organe intermédiaire de transmission 30 autour de l'axe A2 pour maintenir constante la distance entre ces deux axes.

Les modes de réalisation des figures 1 à 4 et 7 à 9 peuvent également être combinés, la liaison entre le tirant 10 et l'organe 30 étant telle que décrite aux figures 1 à 4 et la liaison entre l'organe 30 et le levier 15 telle que décrite aux figures 7 à 9.

En variante ou en supplément, la deuxième biellette 31 peut être articulée sur le levier 15 autour de l'axe A2 et sur l'organe intermédiaire de transmission 30 autour de l'axe A3.

De manière générale, les principes ci-dessus peut être appliqués à des ensembles de colonne de direction 1 où la colonne de direction 3 est réglable en position uniquement en profondeur et/ou en hauteur.

De manière plus générale encore, ces principes peuvent s'appliquer à des ensembles de colonne de direction 1 comprenant des dispositifs de blocage 9 à système autre qu'un système à came et à suiveur de came, et la commande de ce système peut être assurée par un organe de commande autre qu'un levier de manoeuvre. Ainsi, un mécanisme de transmission tel que décrit ci-dessus peut être utilisé pour relier la sortie d'un moto-réducteur formant organe de commande à un organe rotatif d'actionnement d'un dispositif de blocage à excentrique, à genouillère, à vis/écrous.

## Revendications

1. Ensemble de direction (1) pour véhicule automobile, du type comprenant :
- une structure de support (2),
- une colonne de direction (3) portée par la structure de support (2), la colonne de direction comprenant un arbre de direction (4) s'étendant le long d'un axe longitudinal (A), une extrémité arrière (8) de l'arbre de direction (4) étant destinée à être reliée à un volant de direction (7) et étant mobile par rapport à la structure de support (2) le long d'au moins une direction de réglage (D),
- un dispositif (9) de blocage en position de la colonne de direction (3), ce dispositif comprenant un organe d'actionnement (10) mobile en rotation autour d'un premier axe de rotation (A1) entre une position de blocage et une position de libération de la colonne de direction, le premier axe de rotation (A1) étant mobile par rapport à l'extrémité arrière (8) de l'arbre de direction lorsqu'elle se déplace le long de la direction de réglage (D),
- un organe (15) de commande de l'organe d'actionnement (10), cet organe de commande (15) étant mobile en rotation autour d'un deuxième axe de rotation (A2), le deuxième axe de rotation étant lié à l'extrémité arrière (8) de l'arbre de direction lorsqu'elle se déplace le long de la direction de réglage (D), et
- un mécanisme (16) de transmission d'un mouvement de rotation de l'organe de commande (15) vers l'organe d'actionnement (10),
**caractérisé en ce que** le mécanisme de transmission (16) comprend une structure mécanique articulée et déformable le long de la direction de réglage (D), cette structure comprenant au moins un premier organe intermédiaire de transmission (30 ; 30, 47) et au moins deux biellettes (26, 31 ; 26, 31, 45, 46) articulées à l'organe intermédiaire de transmission, l'organe intermédiaire de transmission étant mobile en rotation autour d'un troisième axe de rotation (A3), et **en ce que** le mécanisme de transmission (16) comprend des moyens (34, 35, 37, 40 ; 44 ; 60, 61) de couplage en rotation de l'organe de commande (15) et de l'organe d'actionnement (10) via l'organe intermédiaire de transmission (30).

2. Ensemble selon la revendication 1, **caractérisé en ce que** la structure articulée et les moyens de couplage en rotation sont adaptés pour maintenir sensiblement, au cours de la déformation de la structure articulée, les orientations angulaires respectives de l'organe d'actionnement (10) par rapport au premier axe de rotation (A1) et de l'organe de commande (15) par rapport au deuxième axe de rotation (A2).

3. Ensemble selon la revendication 2, **caractérisé en ce que** la structure articulée et les moyens de couplage en rotation sont adaptés pour que, en l'absence d'un mouvement de rotation de l'organe de commande (15), l'organe intermédiaire de transmission (30) se déplace par translation rotative par rapport à l'organe d'actionnement (10) et à l'organe de commande (15) lorsque la structure articulée se déforme le long de la direction de réglage (D).

4. Ensemble selon l'une des revendications précédentes, **caractérisé en ce que** les moyens de couplage en rotation comprennent au moins une biellette supplémentaire (60, 61) articulée à l'organe intermédiaire de transmission (30) pour former avec la première biellette (26) ou respectivement avec la deuxième biellette (31) un parallélogramme déformable (figs. 7 à 9).

5. Ensemble selon la revendication 4, **caractérisé en ce que** les moyens de couplage en rotation comprennent deux biellettes supplémentaires (60, 61), articulées à l'organe intermédiaire de transmission (30) pour former respectivement avec la première biellette (26) un premier parallélogramme déformable et avec la deuxième biellette (31) un deuxième parallélogramme déformable (figs. 7 à 9).

6. Ensemble selon la revendication 5, **caractérisé en ce que** les angles du ou d'au moins un des parallélogramme(s) déformable(s) sont excentrés par rapport aux premier, deuxième et troisième axes de rotation (A1 à A3 ; figs. 7 à 9).

7. Ensemble selon l'une des revendications précédentes, **caractérisé en ce que** les moyens de couplage en rotation comprennent au moins une première poulie ou roue dentée d'extrémité (34) solidaire en rotation de l'organe d'actionnement (10) ou respectivement de l'organe de commande (15), et une première courroie ou chaîne (37 ; 44) tendue entre la première poulie ou roue dentée d'extrémité et une première poulie ou roue dentée intermédiaire (38) formée par l'organe intermédiaire de transmission (figs. 1 à 6).

8. Ensemble selon la revendication 7, **caractérisé en ce que** la première poulie ou roue dentée d'extrémité (34) est solidaire en rotation de l'organe d'actionnement (10), **en ce que** les moyens de couplage en rotation comprennent en outre une deuxième poulie ou roue dentée d'extrémité (35) solidaire en rotation de l'organe de commande (15), et **en ce que** les moyens de couplage comprennent au moins une courroie ou chaîne (40 ; 44) tendue entre la deuxième poulie ou roue dentée d'extrémité (35) et une poulie ou roue dentée intermédiaire formée par l'organe intermédiaire (30) de transmission (figs. 1 à 6).

9. Ensemble selon la revendication 8, **caractérisé en ce que** l'organe intermédiaire de transmission (30) forme une deuxième poulie ou roue dentée intermédiaire (39), et **en ce que** les moyens de couplage comprennent une deuxième courroie ou chaîne (40) tendue entre la deuxième poulie ou roue dentée d'extrémité (35) et la deuxième poulie ou roue dentée intermédiaire (39) (figs. 1 à 4).

10. Ensemble selon la revendication 8, **caractérisé en ce que** la structure articulée comprend un deuxième organe intermédiaire de transmission (47) formant une deuxième poulie ou roue dentée intermédiaire (47), une troisième biellette (45) et une quatrième biellette (46) articulées au deuxième organe intermédiaire de transmission (47), **en ce que** le deuxième organe intermédiaire de transmission est mobile en rotation autour d'un quatrième axe de rotation (A4), et **en ce que** la première courroie ou chaîne (44) passe sur la première poulie ou roue dentée d'extrémité (34), la première poulie ou une roue dentée intermédiaire (30), la deuxième poulie ou roue dentée d'extrémité (35) et la deuxième poulie ou roue dentée intermédiaire (47).

11. Ensemble selon l'une des revendications précédentes, **caractérisé en ce que** la direction de réglage (D) est parallèle à l'axe longitudinal (A) de l'arbre de direction (4).

12. Véhicule automobile, **caractérisé en ce qu'**il comprend un ensemble selon l'une des revendications précédentes.
